(19) **Europäisches Patentamt**

**European Patent Office**

**Office européen des brevets**

(11) **EP 0 716 388 B1**

(12) **EUROPÄISCHE PATENTSCHRIFT**

(45) Veröffentlichungstag und Bekanntmachung des Hinweises auf die Patenterteilung:
**08.05.2002 Patentblatt 2002/19**

(51) Int Cl.$^7$: **G06K 9/48**, G06K 9/64

(21) Anmeldenummer: **95118315.1**

(22) Anmeldetag: **21.11.1995**

(54) **Verfahren zur Bestimmung der Form eines Körpers**

Procedure for determining the shape of a body

Procédé de détermination de la forme d'un corps

(84) Benannte Vertragsstaaten:
**CH DE FR GB IT LI**

(30) Priorität: **08.12.1994 DE 4443728**

(43) Veröffentlichungstag der Anmeldung:
**12.06.1996 Patentblatt 1996/24**

(73) Patentinhaber: **KRONES AG**
**93068 Neutraubling (DE)**

(72) Erfinder: **Häring, Franz**
**D-93073 Neutraubling (DE)**

(74) Vertreter: **Grünecker, Kinkeldey,**
**Stockmair & Schwanhäusser Anwaltssozietät**
**Maximilianstrasse 58**
**80538 München (DE)**

(56) Entgegenhaltungen:
• **PATTERN RECOGNITION, ROME, NOVEMBER 14 - 17, 1988, Bd. VOL. 1, Nr. 1988, 14.November 1988, INSTITUTE OF ELECTRICAL AND ELECTRONICS ENGINEERS, Seiten 64-68, XP000013012 CHIN-HWA LEE ET AL: "PARTIAL MATCHING OF TWO DIMENSIONAL SHAPES USING RANDOM CODING"**

EP 0 716 388 B1

**Beschreibung**

Die Erfindung bezieht sich auf ein Verfahren zur Bestimmung der Form eines Körpers, wobei eine Kontur des Körpers erfasst wird, gemäß dem Oberbegriff des Anspruchs 1.

Ein derartiges Verfahren ist aus D1 - PATTERN RECOGNITION, ROME, November 14-17, 1988, Bd. Vol. 1, Nr. 1988 14. November 1988, INSTITUTE OF ELECTRICAL AND ELECTRONICS ENGINEERS, Seite 64-68, XP000013012 CHIN-HWA LEE ET ALL: "PARTIAL MATCHING OF TWO DEMINSIONAL SHAPES USING RANDOM CODING". bekannt. Bei diesem Verfahren erfolgt eine maßstabs- und orientierungsunabhängige Konturtransformation. Hierfür werden Zufallspunkte auf der Kontur einander paarweise zugeordnet. Mit diesem Vorgehen ergibt sich eine wirksame und effiziente Korrelationstechnik.

Ein Verfahren zur Bestimmung der Form eines Körpers, wobei eine Kontur des Körpers erfasst wird, ist aus der US-PS 3,963,866 bekannt. Hierbei wird eine Kreisfläche mit Licht bestrahlt und nachfolgend mit einer Kamera abgetastet, welche einen Helligkeitsunterschied innerhalb und außerhalb der Kreisfläche wahrnimmt. Aus der Lage der Punkte, an denen ein Wechsel der Helligkeitsstärke von hell nach dunkel oder von dunkel nach hell auftritt, kann dann die Form der Kreisfläche bestimmt werden. Nachfolgend kann die Form einem Industrieroboter zugeführt werden, welcher daraus die Gestalt oder die Position eines Werkstücks ableiten kann.

Ein Verfahren der eingangs genannten Art wird auch in Flaschenabfüllanlagen und insbesondere bei der Flaschenbodeninspektion verwendet. In jeder Flasche befindet sich ein am Flaschenboden angeordneter Behälter. Bei der Inspektion werden die Flaschen von oben her mit Licht bestrahlt und die Umriße der Flasche und des Behälters werden von einem Aufnahmesystem erfaßt. Um sicherzustellen, daß der erfaßte Umriß tatsächlich von einem Behälter und nicht von Verschmutzungen auf dem Flaschenboden stammt, wird der erfaßte Umriß, welcher aufgrund der Struktur des Behälters eine ganz bestimmte Form hat, mit einer entsprechenden Normform verglichen. Da die Flaschen und auch die Behälter in den Flaschen nie in einer bestimmten Lage ausgerichtet sind, ist es erforderlich, bei diesem Vergleich die erfaßte Form gegenüber der Normform zu drehen oder zu verschieben, bis eine mögliche Deckung der erfaßten Form mit der Normform eintritt.

Bei dem bekannten Verfahren erfordert der Vergleich der erfaßten Form mit der Normform einen großen Rechenaufwand, da insbesondere Drehungen der Formen gegeneinander vorgenommen werden müssen. Dies führt dazu, daß derartige Verfahren zeitaufwendig sind und somit ein Arbeitsprozeß, bei welchem derartige Verfahren verwendet werden, verlangsamt wird.

Weiterhin ist ein Verfahren bekannt, bei welchem aus der ermittelten Kontur der Flächenschwerpunkt und die Hauptträgheitsachsen des Körpers bestimmt und anschließend so gedreht werden, daß die ermittelte Kontur in eine vorbestimmte Lage kommt. Danach wird der Abstand zwischen jedem Punkt der Kontur und einem nächstliegenden Punkt einer Referenzkontur eines Referenzkörpers berechnet. Unterschreitet die Abstandssumme einen bestimmten Wert, so wird die zu ermittelnde Form des Körpers dem Refernzkörper gleichgesetzt. Bei diesem Verfahren muß der Körper vollständig sichtbar sein, um die gesamte Kontur zu ermitteln, da sonst weder der Flächenschwerpunkt noch die Hauptträgheitsachsen bestimmt werden können. Weiterhin ist die Berechnung der Abstandssumme sehr rechenintensiv, da zu jedem Punkt der Kontur der nächstgelegene Punkt des Refernzkörpers gesucht werden muß.

Die Aufgabe der Erfindung besteht somit darin, das Verfahren der eingangs genannten Art derart weiterzubilden, daß es zuverlässig, schnell und mit geringem Rechenaufwand das gewünschte Ergebnis liefert.

Diese Aufgabe wird erfindungsgemäß bei einem gattungsgemäßen Verfahren durch die Merkmale des Kennzeichens des Anspruchs 1 gelöst.

Das Verfahren nach der Erfindung sieht vor, dass zuerst die Kontur als eine Anzahl von Punkten oder Pixeln P(i) dargestellt wird und dann die Numerierung der Punkte derart modifiziert wird, daß eine Anzahl M der Punkte für eine bestimmte Kontur von der Winkellage des Körpers unabhängig ist. Damit wird eine Durchnumerierung der Punkte erzielt, die unabhängig von der Lage der Kontur bzw. des Körpers ist. Liegt dieselbe Kontur beispielsweise horizontal und diagonal, so weist sie die gleiche Anzahl von Punkten auf.

Die Kontur des Körpers wird in eine von der Lage des Körpers unabhängige Konturfunktion umgewandelt, und die Konturfunktion wird mit einer vorgegebenen Referenzkonturfunktion für eine bekannte Form verglichen. Bei dem erfindungsgemäßen Verfahren wird eine Konturfunktion ermittelt, welche von der Lage des Körpers unabhängig ist. Dadurch entfallen alle Rechenschritte hinsichtlich einer Verschiebung oder Drehung, um die erfaßte Kontur in dieselbe Lage zu bringen wie die vorbestimmte Referenzkontur. Die Konturfunktion kann direkt mit der Referenzkonturfunktion verglichen werden, wodurch auf schnelle Weise und mit geringem Rechenaufwand die Form des Körpers ermittelt werden kann. Stimmen beim Vergleich die beiden Funktionen überein, dann entspricht die Form des Körpers der vorgegebenen Referenzform.

Damit die Konturfunktion von der Lage des Körpers unabhängig wird, sieht eine bevorzugte Ausführungsform der Erfindung vor, daß die Umwandlung der Kontur durch eine winkelunabhängige und positionsunabhängige Transformation erfolgt, welche eine innere Struktur der Kontur wiedergibt. Unter der inneren Struktur der Kontur sind Angaben über die Kontur zu verstehen, welche von der Winkellage und der Position der Kontur unabhängig sind. Solche Angaben können die Länge der Kontur oder der von der Kontur umschlossene Flächeninhalt sein. Vorteilhafterweise bezieht sich die innere Struktur auf eine Krümmung der Kontur, so daß für die Transformation die Krümmung bestimmt wird.

Um die Krümmung der Kontur zu bestimmen, sieht eine Weiterbildung der Erfindung vor, daß die Winkel zwischen jeweils zwei von einem Punkt auf der Kontur ausgehenden Sehnen bestimmt werden. Hierbei kann vorteilhafterweise jeder Punkt der Kontur ein gemeinsamer Ausgangspunkt für die zwei Sehnen sein.

Um die Transformation von der Positionslage und der Winkellage der Kontur unabhängig zu machen, sieht eine weitere Ausführungsform der Erfindung vor, daß bei der Transformation jeder Punkt P(i) der Kontur der entsprechende Winkel α (i) zwischen den beiden vom jeweiligen Punkt P(i) ausgehenden Sehnen zugeordnet wird und eine Konturfunktion erhalten wird, welche von der Numerierung der Punkt abhängig ist.

Weiterhin ist es zweckmäßig, daß beim Vergleich der Konturfunktion mit der Referenzkonturfunktion die maximale Kreuzkorrelation zwischen diesen beiden Funktionen über die Gesamtlänge der Kontur oder über eine Länge einer Teilkontur bestimmt wird. Dadurch kann sowohl die Form von Körpern bestimmt werden, die vollständig sichtbar sind als auch Körper, die nur in einem bestimmten Bereich sichtbar sind.

Das erfindungsgemäße Verfahren wird insbesondere zur Bestimmung des Außenumfang eines gasgefüllten Behälters in einer Flasche, welche eine Flaschenabfüllanlage durchläuft, verwendet.

Die Erfindung wird nachstehend anhand der Zeichnung näher erläutert. Die Zeichnung zeigt ein Ausführungsbeispiel der Erfindung. Hierbei stellen dar:

Fig. 1 die Bodenansicht einer Flasche mit darin angeordnetem Körper,

Fig. 2a eine erfaßte Kontur des Körpers in einer 45°-Lage, dargestellt in einem zweidimensionalen Koordinatensystem,

Fig. 2b eine erfaßte Kontur in einer 0°-Lage,

Fig. 2c eine Darstellung nach Fig. 2b mit modifizierter Numerierung,

Fig. 3 eine Darstellung nach Fig. 2a, welche die Ermittlung der Konturfunktion zeigt und

Fig. 4 die aus der Kontur des Körpers ermittelte Konturfunktion.

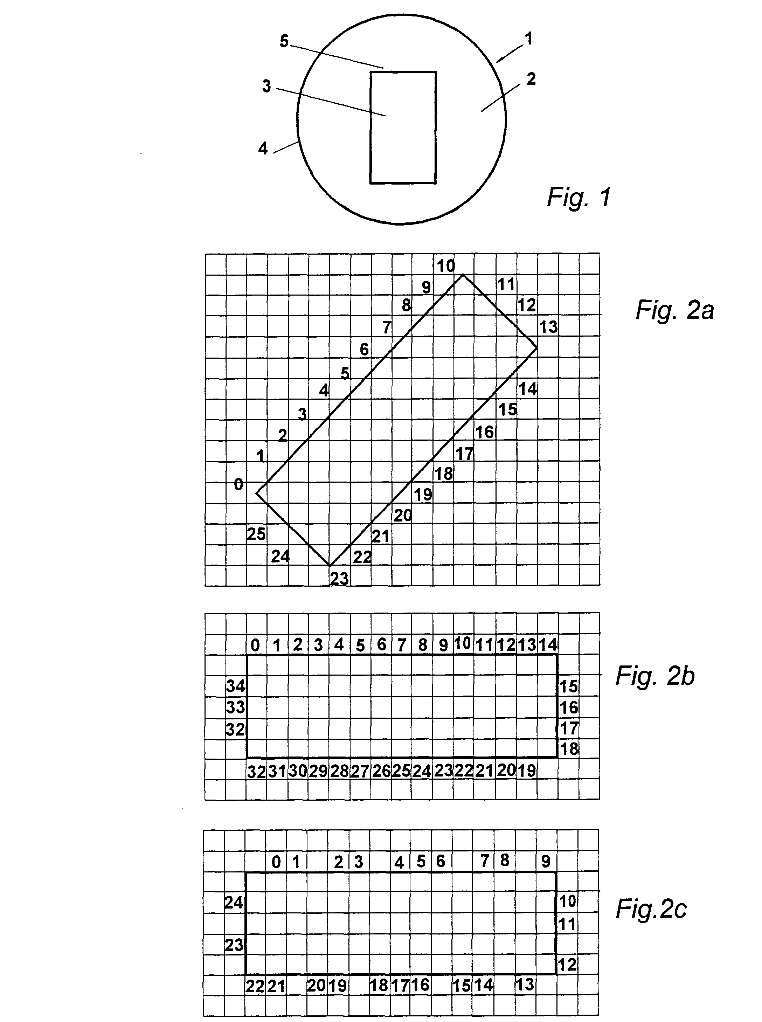

Bei dem erfindungsgemäßen Verfahren wird zuerst eine Flasche 1, in welcher sich ein am Flaschenboden 2 angeordneter Körper 3 befindet, von oben her mit Licht bestrahlt. Ein Umriß 4 der Flasche 1 und ein Umriß oder eine Kontur 5 des Körpers 3 werden mittels lichtempfindlicher Detektoren, welche unterhalb des Flaschenbodens 2 angeordnet sind, festgestellt und in einem zweidimensionalen Koordinatensystem, welches in der Ebene des Flaschenbodens liegt, abgespeichert. Da die Kontur des Körpers mit einer Videokamera aufgezeichnet wird, erfolgt die Abspeicherung in einem Bildspeicher, bei welchem die Bildpunkte zeilenweise und spaltenweise angeordnet sind. Sind die Bildpunkte oder Pixel quadratisch wie in einem kartesischen Koordinatensystem, so gibt es zwei Abstände, den Horizontal- und Vertikalabstand, welche gleich sind, und den Diagonalabstand, welcher sich aus dem Horizontalabstand bzw. Vertikalabstand durch Multiplizieren mit dem Faktor $\sqrt{2}$ ergibt. Verläuft eine Kontur in einem derartigen Koordinatensystem in beliebiger Weise, d.h. horizontal, vertikal und diagonal, dann ist der Abstand von Punkten auf einer solchen Kontur aufgrund des unterschiedlichen Horizontal- bzw. Vertikalabstandes und des Diagonalabstandes nicht konstant. Um einen konstanten Abstand zu erhalten, wird die Kontur in einer Anzahl von Punkten P(i) eingeteilt, wobei die Numerierung der Punkte auf bestimmte Weise modifiziert wird. Ein diagonaler Verlauf der Kontur innerhalb eines Pixels wird als ein ganzer Punkt gewertet und die Numerierung f für diesen Punkt wird über einen Algorithmus f: = f + 1 definiert. Bei einem horizontalen oder vertikalen Verlauf der Kontur innerhalb eines Pixels wird dieser geringer gewertet und die Numierung f wird über einen Algorithmus f: = f + $1/\sqrt{2}$ definiert. Die Nummer des Punktes wird als der ganzzahlige Teil von f definiert, wobei bei derselben Nummer für zwei Punkte der erste Punkt weggelassen wird. Diese modifizierte Numerierung ist in den Fig. 2a - 2c dargestellt. In der Fig. 2a verläuft die linke obere Seite der Kontur diagonal über die Pixel. Derjenige Pixel, indem die linke obere Seite beginnt, wird als Punkt 0 gesetzt. Die Kontur verläuft weiter in den nächsten Pixel, wobei über eine Zeilenänderung in dem Koordinatensystem festgestellt wird, daß es sich um einen diagonalen Verlauf handelt. Dieser Pixel wird dann gemäß dem Algorithmus zu 1: = 0 + 1 gesetzt. Die Kontur verläuft diagonal weiter, so daß der nächste Punkt zu 2: = 1 + 1 gesetzt wird. Auf diese Weise wird die gesamte Kontur in einer Anzahl M von Punkten P(i) eingeteilt. Gemäß Fig. 2a weist die Kontur 28 Punkte auf, nämlich die Punkte P(0) bis P(27).

Fig. 2b zeigt, wie die Numerierung der Punkte ohne Modifizierung erfolgt. Wiederum wird die obere Seite derselben Kontur wie in Fig. 2a betrachtet, wobei jetzt die Kontur in einer 0°-Lage ist, also horizontal liegt. Am linken Ende der oberen Seite wird der Punkt 0 festgelegt. Das nächste Pixel wird als Punkt (1) gesetzt, das nächste Pixel als Punkt (2) und so fort. Auf diese Weise ist die obere Seite in die Punkte P (0) bis P (14) eingeteilt. Die gesamte Kontur weist 40 Punkte auf, nämlich von P (0) bis P (39). Da es sich bei der Kontur in Fig. 2a und 2b um dieselbe Kontur handelt, ist der Abstand zwischen den Punkten in der Kontur gemäß Fig. 2b geringer und zwar genau um den Faktor $\sqrt{2}$.

Fig. 2c zeigt die modifizierte Numerierung. Wiederum beginnend mit dem linken Ende der oberen Seite wird der Pixel als Punkt P (0) gesetzt. Die Kontor verläuft zum nächsten Pixel horizontal, was beispielsweise dadurch festgestellt werden kann, daß die Kontur in der gleichen Zeile verläuft. Da ein horizontaler Verlauf der Kontur gegeben ist, wird der nächste Punkt zu 0 gesetzt, da 0,71: = 0 + 1/$\sqrt{2}$ ist. Die Nummer des Punktes ist der ganzzahlige Teil von f, also 0. Der nächste Punkt wird zu 1 gesetzt, da 1,42 = 0,71 + 0,71 ist. Der nächste Punkt wird zu 2 gesetzt, da 2,13 = 1,42 + 0,71 ist. Bei der Berechnung des nächsten Punktes ergibt sich 2,84 = 2,13 + 0,71. Da nun zwei Punkte dieselbe Nummer, nämlich 2, haben, wird einer von beiden, beispielsweise der erste weggelassen. Durch diese modifizierte Numerierung wird die obere Seite der Kontur in Fig. 2c in 10 Punkte eingeteilt, nämlich von P (0) bis P (10). Damit hat sie die gleiche Einteilung wie die Kontur gemäß Fig. 2a, so daß die Abstände der Punkte etwa konstant sind.

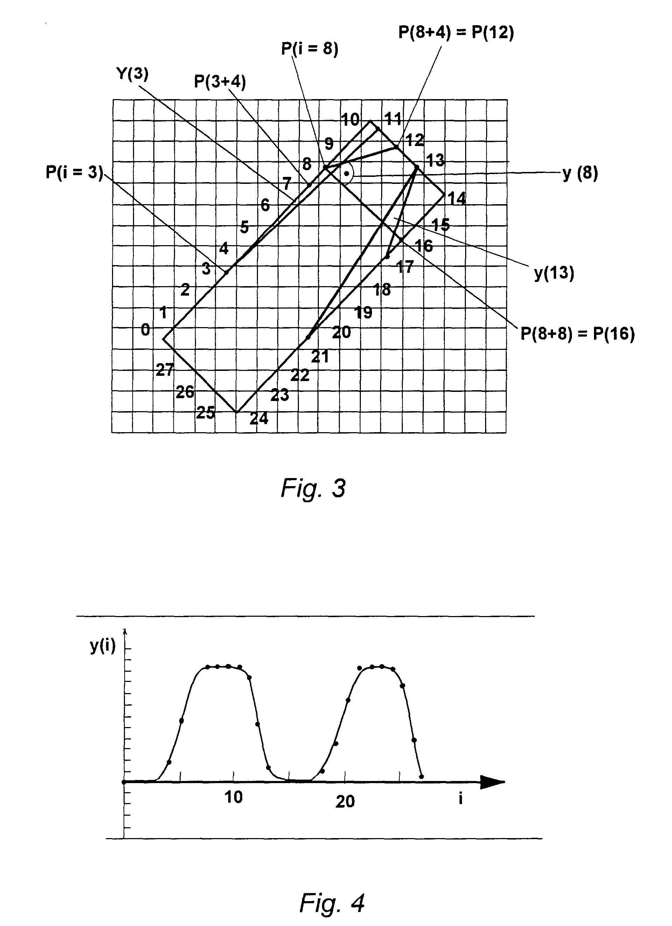

Die Ermittlung der Konturfunktion wird nun anhand von Fig. 3 erklärt. Jeder Punkt P (i) der Kurve ist ein gemeinsamer Ausgangspunkt für zwei Sehnen zu den Punkten P (i + $j_1$) und P (i + $j_2$). Die Werte $j_1$ und $j_2$ können beliebig gewählt werden. In der Fig. 3 ist $j_1$ = 4 und $j_2$ = 8. Im Falle des Punktes i = 8 erstreckt sich somit eine Sehne von dem Punkt P (8) zu P (12) und die weitere Sehne erstreckt sich von dem Punkt P (8) zu dem Punkt P (16). Für den Punkt i = 3 und den Punkt i = 13 sind in der Fig. 3 ebenfalls die Sehnen dargestellt. Der Winkel zwischen den Sehnen ausgehend vom Punkt P (8) wird ermittelt und einem Winkelwert y (8) zugeordnet. Diese Berechnung der Winkelwerte erfolgt für alle Punkte P (i). Auf diese Weise wird die Krümmung der Kontur bestimmt. Die Menge aller Winkelwerte ergibt die Konturfunktion, welche durch die Zuordnung der Winkelwerte y (i) zu den Nummern i der Punkt P (i) ermittelt wird.

Die Konturfunktion wird nun für jeden Wert mit einer fest vorgegebenen Referenzkonturfunktion für einen bestimmten Referenzkörper verglichen. Die Referenzkonturfunktion wird auf die gleiche, vorstehend beschriebene Weise ermittelt wie die Konturfunktion. Stimmen die Werte der Konturfunktion und die Werte der Referenzkonturfunktion für dieselben Numerierungswerte i überein, so entspricht die Form des Körpers derjenigen Form des Referenzkörpers. Damit ist die Form des Körpers bestimmt.

Es ist denkbar, daß die Werte y (i) der Konturfunktion nicht mit den Werten y r (i) der Referenzkonturfunktion übereinstimmen, obwohl die Form des Körpers derjenigen des Referenzkörpers entspricht. Dieser spezielle Fall ergibt sich, wenn der Anfangspunkt i = 0 nicht mit dem Anfangspunkt der Referenzkonturfunktion übereinstimmt. Deshalb wird bei Nichtübereinstimmung der Konturfunktion mit der Referenzkonturfunktion die Numerierung der Funktionswerte um den Wert M, M = 1,2,3 usw. erhöht und dann die so erhöhten Werte jeweils mit dem Referenzkonturwert y r (i) verglichen. Bildlich gesprochen entspricht dies einer linearen Verschiebung der Konturfunktion in Richtung der Numerierung i gegenüber der Referenzkonturfunktion. Stimmen bei irgendeiner Erhöhung der Numerierung die beiden Funktionen überein, so ist wiederum die Form des Körpers ermittelt. Die so ermittelte Form des Körpers kann zusätzlich ausgedruckt oder auf einem Bildschirm angezeigt werden. Wird die Form des Körpers nicht ermittelt, d.h. es stimmen die Konturfunktion und die Referenzkonturfunktion nicht überein, dann wird die Flasche, in welcher der Körper angeordnet ist, ausgeschieden.

Der Vergleich der Konturfunktion mit der Referenzkonturfunktion kann auch über die Bestimmung der maximalen Kreuzkorrelation erfolgen. Die Kreuzkorrelation X ist definiert als

$$X(j) = \sum_{i=0}^{m-1} y(i) * yr(i+j)$$

Die Kreuzkorrelation ist die Summe der Produkte zweier Funktionswerte von zwei Funktionen, von denen die eine aus der anderen beispielsweise durch Verschiebung um einen Wert D hervorgegangen ist. Für einen Wert j = D, bei welchem die beiden Funktionen übereinstimmen, wird die Kreuzkorrelation X(j=d) maximal. Durch Bestimmung des Maximums der Kreuzkorrelation kann man also das Maß der Übereinstimmung zwischen zwei gegeneinander verschobene Funktionen sowie den Betrag der Verschiebung errechnen. Zur Ermittlung des Maximums der Kreuzkorrelation wird die Summe X(j) für alle in Frage kommenden Werte von j gebildet. Der Wert j, welcher ein Maß für die Verschiebung ist, läuft ebenso wie der Wert i von 0 bis m - 1. Ist das Maximum der Kreuzkorrelation X(j) für alle Werte von j bestimmt, dann wird der maximale Wert mit einem vorgegebenen Sollwert verglichen. Wird dieser Sollwert erreicht oder überschritten, dann stimmt die Konturfunktion y(i) mit der Referenzkonturfunktion y r (i) überein. In der Praxis kann eine erhebliche Rechenzeitverkürzung erzielt werden, wenn anstelle der Ermittlung des Maximums der Kreuzkorrelation das Minimum der Quadratsumme Q(j) gebildet wird, wobei die Summe der Differenzquadrate Q (j) definiert

ist als

$$Q(j) = \sum_{i=0}^{m-1} \left[ y(i) - yr(i+j) \right]^2$$

$$= \sum_{i=0}^{m-1} y(i)^2 + \sum_{i=0}^{m-1} yr(i+j)^2 - 2 * \sum_{i=0}^{m-1} y(i) * yr(i+j)$$

$$= c_1 + c_2 - 2 * X(j)$$

Wie aus der Gleichung für die Summe der Differenzquadrate ersichtlich, stellt das letzte Glied in der Summe das Doppelte der Kreuzkorrelation $X(j)$ dar. Damit ist die Summe der Differenzquadrate ebenfalls ein Maß für die Übereinstimmung von zwei Funktionen. Im Gegensatz zur Ermittlung des Maximums der Kreuzkorrelation, wo zuerst für alle Werte j die Kreuzkorrelation $X(j)$ gebildet werden muß, wird bei der Bestimmung des Minimums der Quadratsumme $Q(j)$ die Summenbildung schon dann abgebrochen, wenn die bis dahin erreichte Summe den Wert der bisher kleinsten Summe überschreitet. Denn dann kann die komplette Summe keinesfalls kleiner sein als die bisher kleinste Summe. Durch diese Optimierung verkürzt sich die Rechenzeit auf etwa ein Drittel der Rechenzeit zur Ermittlung des Maximums der Kreuzkorrelation.

Mit dem erfindungsgemäßen Verfahren kann die Form eines Körpers mit geringen Rechenaufwand und somit schnell bestimmt werden, da lediglich eine Konturfunktion mit einer entsprechenden Referenzkonturfunktion verglichen wird, und eine Drehung von ermittelten Formen gegeneinander nicht nötig ist.

**Patentansprüche**

1.   Verfahren zur Bestimmung der Form eines Körpers, wobei eine Kontur des Körpers erfasst, diese in eine von der Lage des Körpers unabhängige Konturfunktion umgewandelt und die Konturfunktion mit einer vorgegebenen Referenzkonturfunktion für eine bestimmte Form verglichen wird,
**dadurch gekennzeichnet, dass**
zuerst die Kontur als eine Anzahl von Punkten oder Pixeln P (i) dargestellt wird, und dann die Nummerierung der Punkte derart modifiziert wird, dass eine Anzahl M der Punkte für eine bestimmte Kontur von einer Winkellage der Kontur unabhängig ist.

2.   Verfahren nach Anspruch 1,
**dadurch gekennzeichnet, dass**
die Umwandlung der Kontur durch eine winkelunabhängige und positionsunabhängige Transformation erfolgt, welche eine innere Struktur der Kontur wiedergibt.

3.   Verfahren nach Anspruch 1,
**dadurch gekennzeichnet, dass**
für die Transformation eine Krümmung der Kontur bestimmt wird.

4.   Verfahren nach Anspruch 1,
**dadurch gekennzeichnet, dass**
in einem kartesischen Koordinatensystem mit Zeilen und Spalten zur modifizierten Nummerierung ein diagonaler Verlauf der Kontur innerhalb eines Pixels als ein ganzer Punkt gewertet wird und die Nummerierung f für den Punkt über einen Algorithmus

$$f: = f + 1$$

definiert wird

und ein horizontaler Verlauf oder vertikaler Verlauf der Kontur innerhalb eines Pixels geringer gewertet wird, wobei die Nummerierung f über einen Algorithmus

$$f: = f + 1/\sqrt{2}$$

definiert wird und weiterhin die Nummer eines Punktes als der ganzzahlige Teil von f definiert wird, wobei bei derselben Nummer für zwei Punkte einer der beiden Punkte weggelassen wird.

5. Verfahren nach einem der Ansprüche 1, 3 oder 4,
   **dadurch gekennzeichnet, dass**
   für die Bestimmung der Krümmung der Kontur der Winkel zwischen jeweils zwei von einem Punkt P (i) auf der Kontur ausgehenden Sehnen bestimmt wird.

6. Verfahren nach Anspruch 5,
   **dadurch gekennzeichnet, dass**
   jeder Punkt der Kontur ein gemeinsamer Ausgangspunkt für die zwei Sehnen ist.

7. Verfahren nach Anspruch 5 oder 6,
   **dadurch gekennzeichnet, dass**
   bei der Transformation jedem Punkt P (i) der Kontur der entsprechende Winkel y (i) zwischen den beiden vom jeweiligen Punkt P (i) ausgehenden Sehnen zugeordnet wird und eine Konturfunktion erhalten wird, welche von der Nummerierung der Punkte abhängig ist.

8. Verfahren nach einem der Ansprüche 5 bis 7,
   **dadurch gekennzeichnet, dass**
   die eine vom Punkt P (i) ausgehende Sehne zum Punkt P ($i + j_1$) läuft und die andere Sehne zum Punkt ($I + j_2$) läuft, wobei $j_1$ kleiner als $j_2$ ist.

9. Verfahren nach einem der Ansprüche 1 bis 8,
   **dadurch gekennzeichnet, dass**
   mindestens ein Wert y (i) der Konturfunktion für den Punkt P (i) der Kontur mit mindestens einem Wert y r (i) der Referenzkonturfunktion für denselben Punkt verglichen wird.

10. Verfahren nach einem der Ansprüche 1 bis 8,
    **dadurch gekennzeichnet, dass**
    die Werte der Konturfunktion und die Werte der Referenzkonturfunktion für unterschiedliche Punkte auf der Kontur verglichen werden, um so eine um einen bestimmten Betrag gegenüber der Referenzkonturfunktion verschobene, aber ansonsten identische Konturfunktion zu erkennen.

11. Verfahren nach einem der Ansprüche 1 bis 8,
    **dadurch gekennzeichnet, dass**
    die Länge der Konturfunktion mit der Länge der Referenzkonturfunktion verglichen wird.

12. Verfahren nach einem der Ansprüche 1 bis 8,
    **dadurch gekennzeichnet, dass**
    die maximale Kreuzkorrelation zwischen der Konturfunktion und der Referenzkonturfunktion über die gesamte Länge der Kontur oder über die Länge einer Teilkontur bestimmt wird.

13. Verfahren nach einem der Ansprüche 1 bis 8,
    **dadurch gekennzeichnet, dass**
    das Minimum der Summe der Differenzquadrate zwischen den Werten der Konturfunktion und der Referenzkonturfunktion gebildet wird.

**14.** Verfahren nach einem der Ansprüche 1 bis 13,
**dadurch gekennzeichnet, dass**
der Körper ein gasgefüllter Behälter in einer Flasche insbesondere in einer Flaschenabfüllanlage ist.

**15.** Verfahren nach Anspruch 14,
**dadurch gekennzeichnet, dass**
die Kontur der Außenumfang des Behälters ist.

**16.** Verfahren nach einem der Ansprüche 1 bis 15,
**dadurch gekennzeichnet, dass**
die Kontur mit einer Abtasteinrichtung erfasst wird.

**17.** Verfahren nach Anspruch 16,
**dadurch gekennzeichnet, dass**
die Abtasteinrichtung eine photooptische Vorrichtung aufweist.

**Claims**

**1.** A method of determining the shape of a body, comprising the steps of detecting a contour of said body, converting said contour of the body into a contour function which is independent of the position of said body, and comparing said contour function with a predetermined reference contour function for a specific shape,
**characterized in that**
the contour is first represented as a number of points or pixels P(i), and that the numbering of the points is then modified such that a number M of the points for a specific contour is independent of an angular position of said contour.

**2.** A method according to claim 1,
**characterized in that**
the conversion of the contour is effected by an angle- and position-independent transformation which is representative of an inner structure of the contour.

**3.** A method according to claim 1,
**characterized in that**
a curvature of the contour is determined for the transformation.

**4.** A method according to claim 1,
**characterized in that,**
in a cartesian coordinate system with lines and columns, modified numbering is obtained by rating a diagonal orientation of the contour within a pixel as a whole point and by defining the numbering f for said point through an algorithm

$$f := f + 1,$$

and by giving a horizontal orientation or a vertical orientation of the contour within a pixel a lower rating, the numbering f being then defined through an algorithm

$$f := f + 1/\sqrt{2},$$

and the number of a point being defined as the integer part of f, and one of two points being omitted, if two points have the same number.

**5.** A method according to one of the claims 1, 3 or 4,
**characterized in that,**
for determining the curvature of the contour, the angle between two respective chords extending from a point P (i) on the contour is determined.

**6.** A method according to claim 5,
**characterized in that**
each point of the contour is a common starting point for the two chords.

**7.** A method according to claim 5 or 6,
**characterized in that,**
when the transformation is carried out, each point P (i) of the contour has associated therewith the corresponding angle y (i) between the two chords extending from the respective point P (i), and that a contour function is obtained, which depends on the numbering of the points.

**8.** A method according to one of the claims 5 to 7,
**characterized in that**
the chord, which begins at the point P (i), extends to the point P (i + $j_1$) and that the other chord extends to the point P (i + $j_2$), $j_1$ being smaller than $j_2$.

**9.** A method according to one of the claims 1 to 8,
**characterized in that**
at least one value y (i) of the contour function for the point P (i) of the contour is compared with at least one value y r (i) of the reference contour function for the same point.

**10.** A method according to one of the claims 1 to 8,
**characterized in that**
the values of the contour function and the values of the reference contour function are compared for different points on the contour so as to recognize a contour function which has been shifted by a certain amount relative to the reference contour function but is otherwise identical therewith.

**11.** A method according to one of the claims 1 to 8,
**characterized in that**
the length of the contour function is compared with the length of the reference contour function.

**12.** A method according to one of the claims 1 to 8,
**characterized in that**
the maximum cross correlation between the contour function and the reference contour function is determined over the whole length of the contour or over the length of a subcontour.

**13.** A method according to one of the claims 1 to 8,
**characterized in that**
the minimum of the sum of the squared differences of the values of the contour function and of the reference contour function is formed.

**14.** A method according to one of the claims 1 to 13,
**characterized in that**
the body is a gas-filled receptacle in a bottle, especially in a bottle-filling plant.

**15.** A method according to claim 14,
**characterized in that**
the contour is the outer circumference of the receptacle.

**16.** A method according to one of the claims 1 to 15,
**characterized in that**
the contour is detected with the aid of a scanning means.

**17.** A method according to claim 16,
**characterized in that**
the scanning means is provided with a photooptical device.

**Revendications**

1. Procédé de détermination de la forme d'un corps, dans lequel un contour du corps est enregistré, ce contour est converti en une fonction de contour indépendante de la position du corps, et la fonction de contour est comparée à une fonction de contour de référence prédéfinie pour une forme définie, **caractérisé en ce que** le contour est d'abord représenté sous la forme d'un nombre de points ou pixels P(i), puis la numérotation des points est modifiée de sorte qu'un nombre M de points pour un contour défini est indépendant de la position angulaire du contour.

2. Procédé suivant la revendication 1, **caractérisé en ce que** la conversion du contour est assurée par une transformation indépendante de l'angle et de la position, qui reproduit une structure intérieure du contour.

3. Procédé suivant la revendication 1, **caractérisé en ce qu'**une courbure du contour est déterminée pour la transformation.

4. Procédé suivant la revendication 1, **caractérisé en ce que**, dans un système de coordonnées cartésiennes avec des lignes et des colonnes, une allure diagonale du contour à l'intérieur d'un pixel est appréciée comme un point entier pour la numérotation modifiée, et la numérotation f pour le point est définie par l'intermédiaire d'un algorithme f : = f + 1, et une allure horizontale ou verticale du contour à l'intérieur d'un pixel a une appréciation moindre, la numérotation f étant définie par l'intermédiaire d'un algorithme f : = f + $1/\sqrt{2}$, et le numéro d'un point étant défini comme la partie entière de f, l'un des deux points étant omis en présence du même numéro pour deux points.

5. Procédé suivant l'une des revendications 1, 3 et 4, **caractérisé en ce que** l'angle compris respectivement entre deux cordes partant d'un point P(i) sur le contour est déterminé pour la détermination de la courbure du contour.

6. Procédé suivant la revendication 5, **caractérisé en ce que** chaque point du contour est un point de départ commun pour les deux cordes.

7. Procédé suivant l'une des revendications 5 et 6, **caractérisé en ce que**, lors de la transformation, l'angle y(i) correspondant entre les deux cordes partant du point respectif P(i) est associé à chaque point P(i) du contour, et une fonction de contour est obtenue qui dépend de la numérotation des points.

8. Procédé suivant l'une des revendications 5 à 7, **caractérisé en ce qu'**une corde partant du point P(i) rejoint le point P(i+j$_1$) et l'autre corde rejoint le point P(i+j$_2$), j$_1$ étant inférieur à j$_2$.

9. Procédé suivant l'une des revendications 1 à 8, **caractérisé en ce qu'**au moins une valeur y(i) de la fonction de contour pour le point P(i) du contour est comparée à au moins une valeur y r(i) de la fonction de référence pour le même point.

10. Procédé suivant l'une des revendications 1 à 8, **caractérisé en ce que** les valeurs de la fonction de contour et les valeurs de la fonction de contour de référence sont comparées pour différents points sur le contour, pour identifier ainsi une fonction de contour déplacée d'une valeur définie par rapport à la fonction de contour de référence, mais sinon identique.

11. Procédé suivant l'une des revendications 1 à 8, **caractérisé en ce que** la longueur de la fonction de contour est comparée à la longueur de la fonction de contour de référence.

12. Procédé suivant l'une des revendications 1 à 8, **caractérisé en ce que** la corrélation croisée maximale entre la fonction de contour et la fonction de contour de référence est déterminée sur toute la longueur du contour ou sur la longueur d'un contour partiel.

13. Procédé suivant l'une des revendications 1 à 8, **caractérisé en ce que** le minimum de la somme de la différence des carrés est formé entre les valeurs de la fonction de contour et de la fonction de contour de référence.

14. Procédé suivant l'une des revendications 1 à 13, **caractérisé en ce que** le corps est un récipient rempli de gaz dans une bouteille, en particulier dans une installation d'embouteillage.

15. Procédé suivant la revendication 14, **caractérisé en ce que** le contour est le pourtour externe du récipient.

16. Procédé suivant l'une des revendications 1 à 15, **caractérisé en ce que** le contour est enregistré par un dispositif de balayage.

17. Procédé suivant la revendication 16, **caractérisé en ce que** le dispositif de balayage présente un dispositif photooptique.

*Fig. 1*

*Fig. 2a*

*Fig. 2b*

*Fig.2c*

Fig. 3

Fig. 4